# EUROPEAN PATENT SPECIFICATION

(11) **EP 3 528 103 B1**
(45) Date of publication and mention of the grant of the patent: **28.06.2023**
(21) Application number: 16919877.7
(22) Date of filing: 31.10.2016
(51) Int. Cl.: G06F 3/0488, G06F 3/0484

(54) **SCREEN LOCKING METHOD, TERMINAL AND SCREEN LOCKING DEVICE**
BILDSCHIRMVERRIEGELUNGSVERFAHREN, ENDGERÄT UND BILDSCHIRMVERRIEGELUNGSVORRICHTUNG
PROCÉDÉ DE VERROUILLAGE D'ÉCRAN, TERMINAL ET DISPOSITIF DE VERROUILLAGE D'ÉCRAN

(43) Date of publication of application: 21.08.2019
(73) Proprietor: Honor Device Co., Ltd., Shenzhen, Guangdong 518040 (CN)
(72) Inventor: DU, Hongyan, Shenzhen Guangdong 518129 (CN)
(74) Representative: Gill Jennings & Every LLP
(86) International application number: PCT/CN2016/104148
(87) International publication number: WO 2018/076384

(56) References cited:
- WO-A1-2013/086793
- CN-A- 101 021 762
- CN-A- 103 268 197
- US-A1- 2013 234 982
- US-A1- 2013 257 768

## Description

### TECHNICAL FIELD

The present invention relates to the field of terminal screen display technologies, and in particular, to a screen locking method, a terminal, and a screen locking apparatus.

### BACKGROUND

In the industry of handheld devices including a mobile phone, with technical advancement and a user requirement for a large screen, a handheld device manufacturer tends to use a larger display screen, and most manufacturers use a touchable display screen on which a touch range occupies a relatively large area of a handheld device surface.

For a handheld device with a relatively large screen touch range, when a screen is lit up and touch takes effect, a user easily accidentally touches a touchscreen, and consequently an erroneous instruction is delivered to an application program shown on the touchscreen. To avoid accidental touch, a hand that holds the device can only avoid randomly touching the touch range as much as possible, and consequently it is relatively uncomfortable. Especially in a one-hand operation or use of a larger handheld device, it is prone to cause an inconvenient operation, an erroneous operation, hand fatigue, or dropping of the handheld device, and relatively poor user experience is caused.

Currently, in some solutions to an accidental touch phenomenon, in addition to a manner of directly locking an entire screen, to be specific, the entire screen of a mobile phone is locked when, for example, the user does not use the terminal, and the screen is unlocked when the user needs to use the terminal, in some application programs such as a video play program, a manner of touching a virtual key to lock the entire screen except an unlock key is further provided. In a locked state, if a touchscreen area except the unlock key is touched, an application program does not respond to this operation, and the entire touchscreen does not respond to the touch operation until the unlock key is touched and the touchscreen is unlocked and restored. However, a disadvantage is that this function always depends on design of a specific application program, and can be used only in the specific application program with this function, and another user interface does not have this function. In addition, different application programs have different user interfaces and different operation methods, it is relatively difficult for the user to master the different operation methods, and the user cannot flexibly adjust a screen area locked through touch.

Therefore, how to provide a more flexible screen locking solution to enable a user to independently select and lock a to-be-locked area and to improve device holding experience of the user is an urgent problem to be researched and resolved in the industry.

US 2013/0257768 relates to method and apparatus for providing flexible bezel. US 2013/0234982 relates to mobile terminal and display control method.

### SUMMARY

Embodiments of the present invention provide a solution to provide a more flexible screen locking solution, so that a user can independently select and lock a to-be-locked area, thereby improving user experience.

Various aspects of the present disclosure have been defined in the independent claims. Further technical features of each of these aspects have been defined in the respective dependent claims.

Based on certain principles provided in the present disclosure, a user is allowed to trigger selection and locking of a partial display area on the touchscreen by performing a sliding operation on the touchscreen, and the to-be-locked area on the touchscreen is selected based on a touch point position at which the sliding operation performed by the user stops on the touchscreen, so that not only a screen can be partially locked, but the user can also flexibly select a to-be-locked display area based on a requirement by using the sliding operation performed by the user on the touchscreen. Therefore, compared with an existing screen locking technical solution, this solution is more flexible, and different user screen locking requirements can be met, thereby improving user experience.

Based on certain principles provided in the present disclosure, the selected to-be-locked area is selected based on the first edge and the second edge of the touchscreen and the respective touch point positions at which the first sliding operation and the second operation stop on the touchscreen. This selection manner conforms to user operation experience, and the user can conveniently and flexibly select a to-be-locked display area by using the sliding operation performed by the user on the touchscreen, so that different user screen locking requirements can be met, thereby improving user experience.

Based on certain principles provided in the present disclosure, the user may be further allowed to add, by using a sliding operation performed from another edge of the touchscreen, a to-be-locked area that needs to be selected, so that the user can flexibly and conveniently add the to-be-locked display area based on a user requirement by using different sliding operations performed on the touchscreen, thereby improving user experience.

Based on certain principles provided in the present disclosure, the user may be further allowed to further add, by using a sliding operation performed from another edge of the touchscreen, a to-be-locked area that needs to be selected, so that the user can flexibly and conveniently add the to-be-locked display area based on a user requirement by using different sliding operations performed on the touchscreen, thereby improving user experience.

Based on certain principles provided in the present disclosure, visual prompt of the selected to-be-locked area may be further provided for the user, to provide user experience.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG 1 is a schematic diagram of a partial structure of a mobile phone involved in some embodiments of the present invention;
FIG 2 is a schematic flowchart of a screen locking method according to some embodiments of the present invention;
FIG 3 (a) is a schematic diagram of a mobile phone touchscreen edge involved in some embodiments of the present invention;
FIG 3 (b) is a schematic diagram of a mobile phone touchscreen edge involved in some other embodiments of the present invention;
FIG 3 (c) is a schematic diagram of a mobile phone touchscreen edge involved in some other embodiments of the present invention;
FIG 3 (d) is a schematic diagram of a mobile phone touchscreen edge involved in some other embodiments of the present invention;
FIG 4 (a) is a schematic diagram of detecting a sliding operation by a terminal in actual application according to some embodiments of the present invention;
FIG 4 (b) is a schematic diagram of detecting a sliding operation by a terminal in actual application according to some other embodiments of the present invention;
FIG 5 is a schematic diagram of a to-be-locked area selected by a sliding operation according to some embodiments of the present invention;
FIG 6 (a) is a schematic diagram of a selected first additional to-be-locked area according to some embodiments of the present invention;
FIG 6 (b) is a schematic diagram of a selected first additional to-be-locked area according to some other embodiments of the present invention;
FIG 6 (c) is a schematic diagram of a selected first additional to-be-locked area according to some other embodiments of the present invention;
FIG 7 is a schematic diagram of a selected second additional to-be-locked area according to some embodiments of the present invention;
FIG 8 (a) is a schematic diagram of performing a sliding operation from a corner in actual application according to some embodiments of the present invention;
FIG 8 (b) is a schematic diagram of performing a sliding operation from a corner in actual application according to some other embodiments of the present invention;
FIG 9 (a) is a schematic diagram of a to-be-locked area according to some embodiments of the present invention;
FIG 9 (b) is a schematic diagram of a to-be-locked area according to some other embodiments of the present invention;
FIG 10 is a schematic diagram of an example case in which a locked area is touched according to some embodiments of the present invention;
FIG 11 is a schematic flowchart of a screen locking method according to some other embodiments of the present invention;
FIG 12 (a) is a schematic diagram of detecting a sliding operation by a terminal according to some embodiments of the present invention;
FIG 12 (b) is a schematic diagram of detecting a sliding operation by a terminal according to some other embodiments of the present invention;
FIG 13 (a) is a schematic diagram of a to-be-locked area according to some embodiments of the present invention;
FIG 13 (b) is a schematic diagram of a to-be-locked area according to some other embodiments of the present invention;
FIG 14 (a) is a schematic diagram of a selected to-be-locked area according to some embodiments of the present invention;
FIG 14 (b) is a schematic diagram of a selected to-be-locked area according to some other embodiments of the present invention;
FIG 15 is a schematic structural diagram of a terminal according to some embodiments of the present invention;
FIG 16 is a schematic structural diagram of a screen locking apparatus according to some embodiments of the present invention;
FIG 17 is a schematic structural diagram of a terminal according to some embodiments of the present invention; and
FIG 18 is a schematic structural diagram of a screen locking apparatus according to some embodiments of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention.

Embodiments of the present invention provide a screen locking method and a terminal. In a screen locking solution provided in the embodiments of the present invention, a user can trigger selection and locking of a partial display area on a touchscreen by performing a sliding operation on the touchscreen, and the user is allowed to flexibly select and lock a display area on the touchscreen based on a requirement by performing the sliding operation on the touchscreen. Therefore, it may be learned that, in technical solutions provided in the embodiments of the present invention, not only a screen can be partially locked, but the user is also allowed to flexibly select and adjust a to-be-locked display area on the touchscreen based on a requirement. Therefore, compared with an existing screen locking technical solution, the technical solutions are more flexible, both screen locking experience and device holding experience of the user are improved, and especially for a handheld device with a larger touchscreen area, disadvantages of a small holding area and poor holding experience can be overcome.

For example, for a currently widely used bar-type mobile phone or another type of terminal with a relatively large screen ratio, in the screen locking solutions provided in the embodiments of the present invention, a user can independently select a display area on a touchscreen based on a requirement, and then lock the display area. Therefore, screen locking requirements of various different users (such as different use habits, different palm sizes, and a left hand type or a right hand type) for independently selecting and locking a partial area on the touchscreen in different use scenarios can be met, and the user is allowed to independently select and lock different areas on the touchscreen, so that the user can randomly hold this area. Therefore, while an unlocked area remains touchable, holding experience is improved, hand fatigue and a mobile phone dropping probability are reduced, and user experience is improved.

Embodiments of the present invention relate to a terminal with a touchscreen. For example, the terminal with a touchscreen described in the embodiments of the present invention may include a mobile phone, a tablet computer, a personal digital assistant (Personal Digital Assistant, PDA), a point of sale (Point of Sales, POS), a vehicle-mounted computer, a desktop computer, a notebook computer, or the like.

The terminal usually supports a plurality of application programs, such as one or more of the following: a presentation application program, a text processing application program, a phone application program, an email application program, an instant message application program, and a network browsing application program. Various application programs that can be executed on the terminal may use at least one common physical user interface device, such as a touchscreen. One or more functions of the touchscreen and corresponding information displayed on the device may be adjusted and/or changed from an application program to a next application program and/or may be adjusted and/or changed on a corresponding application program. In this way, a common physical architecture (for example, the touchscreen) of the terminal may support the various application programs by using a user interface (User Interface, UI) that is intuitive and clear to a user.

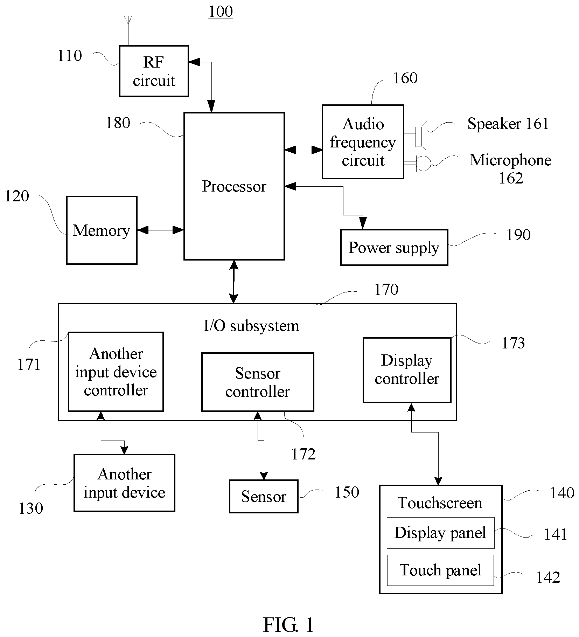

For example, the terminal is a mobile phone. FIG 1 is a schematic block diagram of a partial structure of a mobile phone 100 related to an embodiment of the present invention. As shown in FIG 1, the mobile phone 100 includes components such as an RF (Radio Frequency, radio frequency) circuit 110, a memory 120, another input device 130, a touchscreen 140, a sensor 150, an audio frequency circuit 160, an input/output (I/O) subsystem 170, a processor 180, and a power supply 190. These components may communicate with each other by using one or more communications buses or signal cables.

It should be understood that a mobile phone structure shown in FIG 1 constitutes no limitation on the mobile phone. The mobile phone may include more or fewer components than those shown in the figure, or may combine some components, or may split some components, or may have different component arrangements. Various components in the mobile phone structure shown in FIG 1 may be implemented by using hardware, software, or a combination of hardware and software, and include one or more signal processors and/or application-specific integrated circuits.

The components of the mobile phone 100 are specifically described below in detail with reference to FIG 1.

The RF circuit 110 may be configured to: receive and send information, or receive and send a signal during a call. In particular, after receiving downlink information of a base station, the RF circuit 110 sends the downlink information to the processor 180 for processing, and in addition, sends related uplink data to the base station. Generally, the RF circuit includes but is not limited to an antenna, at least one amplifier, a transceiver, a coupler, a low noise amplifier (Low Noise Amplifier, LNA), a duplexer, and the like. In addition, the RF circuit 110 may further communicate with a network and another device through wireless communication. The wireless communication may use any communication standard or protocol, including but not limited to: Global System for Mobile Communications (Global System for Mobile Communications, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (Short Messaging Service, SMS), and the like.

The memory 120 may be configured to store a software program and a module. The processor 180 executes various functional applications and data processing of the mobile phone 100 by running the software program and the module stored in the memory 120. The memory 120 may mainly include a program storage area and a data storage area. The program storage area may store an operating system, an application program required by at least one function (such as a sound play function or an image play function), and the like. The data storage area may store data (such as audio data or an address book) created based on use of the mobile phone 100, and the like. In addition, the memory 120 may include a high-speed random access memory, or may include a nonvolatile memory, such as at least one magnetic disk storage device, a flash storage device, or another volatile solid-state storage device.

The another input unit 130 may be configured to: receive input digital or character information; and generate key signal input related to user setting and function control of the mobile phone 100. Specifically, the another input device 130 may include but be not limited to one or more of a physical keyboard, a function key (such as a volume control key or a power on/off key), a trackball, a mouse, a joystick, or an optical mouse (the optical mouse is a touch-sensitive surface that does not display visual output, or an extension of a touch-sensitive surface formed by a touchscreen). The another input device 130 is connected to another input device controller 171 of the I/O subsystem 170, and exchanges a signal with the processor 180 under the control of the another input device controller 171.

The touchscreen 140 may be configured to display visual output to a user, including displaying information entered by the user, information provided for the user, and various menus of the mobile phone 100, and may further provide an input interface and an output interface between the device and the user, and receive input of the user. The visual output may include a graph, a text, an icon, a video, and any combination thereof. The touchscreen 140 may include a display panel 141 and a touch panel 142. The display panel 141 may be configured by using a liquid crystal display (Liquid Crystal Display, LCD), an organic light-emitting diode (Organic Light-Emitting Diode, OLED), or the like. The touch panel 142, also referred to as a touch-sensitive screen, can collect a touch or non-touch operation performed by a user on or near the touch panel 142 (for example, an operation performed by the user on or near the touch panel 142 by using any appropriate object or accessory, such as a finger or a stylus, or a motion sensing operation may be included, where the operation includes operation types such as a single-point control operation and a multi-point control operation), and can drive a corresponding connection apparatus based on a preset program.

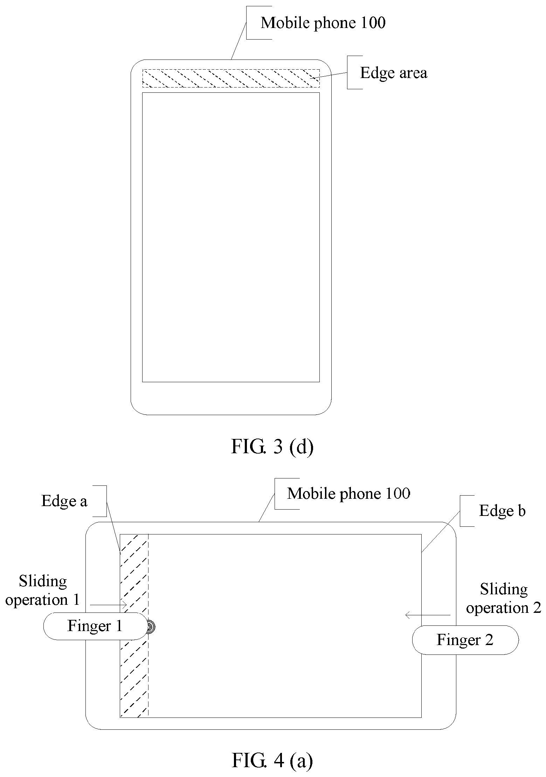

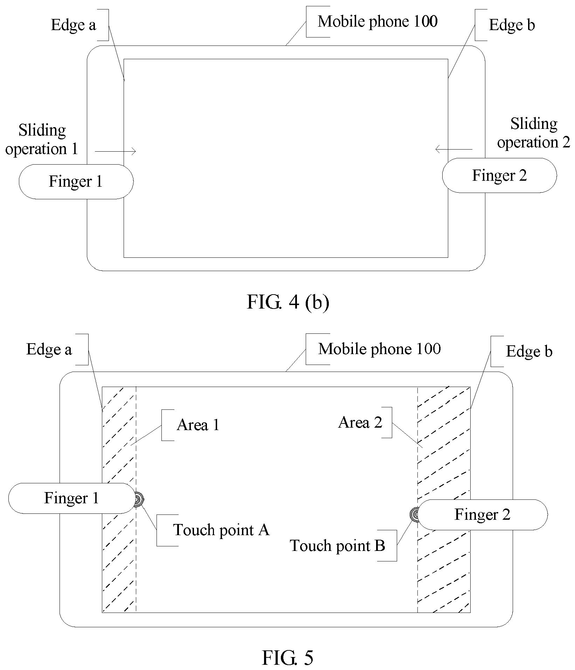

Optionally, the touch panel 142 may include two parts: a touch detection apparatus and a touch controller. The touch detection apparatus may detect a touch position, an orientation, a gesture, or pressure of the user, detect a signal brought by a touch operation, and send the signal to the touch controller. The touch controller receives touch information from the touch detection apparatus, converts the touch information into information that can be processed by the processor, then sends the information to the processor 180, and can receive and execute a command sent by the processor 180. In addition, the touch panel 142 may be implemented by using a plurality of types such as a resistive type, a capacitive type, infrared, and a surface acoustic wave, or the touch panel 142 may be implemented by using any future technology. Further, the touch panel 142 may cover the display panel 141, and the user may perform, based on displayed content (the displayed content includes but is not limited to a soft keyboard, a virtual mouse, a virtual key, an icon, and the like) of the display panel 141, an operation on or near the touch panel 142 that covers the display panel 141. After the touch panel 142 detects the operation on or near the touch panel 142, the touch panel 142 sends the operation to the processor 180 by using the I/O subsystem 170 to determine user input, and then the processor 180 provides, based on the user input, corresponding visual output on the display panel 141 by using the I/O subsystem 170. Although the touch panel 142 and the display panel 141 in FIG 4 are used as two independent parts to implement input and output functions of the mobile phone 100, in some embodiments, the touch panel 142 and the display panel 141 may be integrated to implement the input and output functions of the mobile phone 100.

The mobile phone 100 may further include at least one type of sensor 150, such as a light sensor, a motion sensor, a pressure sensor, or another sensor. Specifically, the light sensor may include an ambient light sensor and a proximity sensor. The ambient light sensor may adjust luminance of the display panel 141 based on brightness or dimness of ambient light. The proximity sensor may close the display panel 141 and/or backlight when the mobile phone 100 approaches an ear. As a type of the motion sensor, an accelerometer sensor may detect accelerations values in different directions (usually, three axes), may detect a value and a direction of gravity in a static state, and may be configured to identify mobile phone posture application (such as switch between landscape and portrait screens, a related game, and magnetometer posture calibration), and a vibration-recognition related function (such as a pedometer and a stroke), and the like. A gyroscope, a barometer, a hygrometer, a thermometer, an infrared sensor, and another sensor may be further configured on the mobile phone 100, and details are not described herein.

The audio frequency circuit 160, a speaker 161, and a microphone 162 may provide an audio interface between the user and the mobile phone 100. The audio frequency circuit 160 may transmit, to the speaker 161, the received signal obtained through audio data conversion, and the speaker 161 converts the signal into a sound signal for output. Further, the microphone 162 converts a collected sound signal into a signal, and the audio frequency circuit 160 receives the signal, converts the signal into audio data, and then outputs the audio data to the RF circuit 108, so as to send the audio data to, for example, another mobile phone, or output the audio data to the memory 120 for further processing.

The I/O subsystem 170 is configured to control an external input/output device, and may include another input device controller 171, a sensor controller 172, and a display controller 173. Optionally, one or more other input control device controllers 171 receive a signal from the another input device 130 and/or send a signal to the another input device 130. The another input device 130 may include a physical button (a press button, a rocker button, or the like), a dial pad, a slider switch, a joystick, a click scroll wheel, and an optical mouse (the optical mouse is a touch-sensitive surface that does not display visual output, or an extension of a touch-sensitive surface formed by a touchscreen). It should be noted that the another input control device controller 171 may be connected to any one or more of the foregoing devices. The display controller 173 in the I/O subsystem 170 receives a signal from the touchscreen 140 and/or sends a signal to the touchscreen 140. After the touchscreen 140 detects the user input, the display controller 173 converts the detected user input into interaction with a user interface object displayed on the touchscreen 140, that is, implements human-machine interaction. The sensor controller 172 may receive a signal from one or more sensors 150 and/or send a signal to one or more sensors 150.

The processor 180 is a control center of the mobile phone 100, uses various interfaces and lines to connect all parts of the entire mobile phone, and performs various functions and data processing of the mobile phone 100 by running or executing the software program and/or the module stored in the memory 120 and invoking data stored in the memory 120, so as to perform overall monitoring on the mobile phone. Optionally, the processor 180 may include one or more processing units. Preferably, an application processor and a modem processor may be integrated into the processor 180. The application processor mainly processes an operating system, a user interface, an application program, and the like. The modem processor mainly processes wireless communication. It may be understood that the modem processor may not be integrated into the processor 180.

The mobile phone 100 further includes the power supply 190 (such as a battery) that supplies power to the components. Preferably, the power supply may be logically connected to the processor 180 by using a power supply management system, so that functions such as charging, discharging, and power consumption management are implemented by using the power supply management system.

Although not shown, the mobile phone 100 may further include a camera, a Bluetooth module, and the like. Details are not described herein.

The embodiments of the present invention are described below in detail with reference to the accompanying drawings.

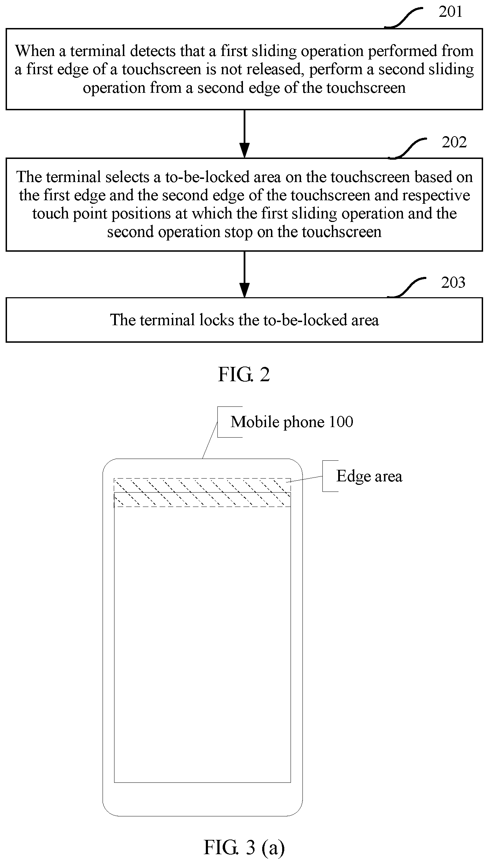

FIG 2 is a schematic flowchart of a screen locking method according to some embodiments of the present invention. A procedure may be implemented by using software programming or a combination of software and hardware, and may be specifically implemented on a terminal with a touchscreen, for example, on the mobile phone 100 with the touchscreen 140 shown in FIG 1.

As shown in FIG 2, the procedure of the screen locking method provided in some embodiments of the present invention includes the following steps.

Step 201: When the terminal detects that a first sliding operation performed from a first edge of the touchscreen is not released, perform a second sliding operation from a second edge of the touchscreen.

It should be understood that although the terms "first", "second", and the like may be used to describe various elements (such as an edge or a sliding operation) in this application, these elements are not limited by these terms, and these terms are merely used to distinguish one element from another. For example, the first edge may be named a second edge, and similarly, the second edge may be named a first edge. Without departing from the scope of the present invention, both the first edge and the second edge are edges but not a same edge.

An "edge" described in this application may be specifically understood as a screen edge of the touchscreen, or may be understood as an edge area determined from a screen edge of the touchscreen based on a preset criterion. For example, in some embodiments of the present invention, an edge area on the touchscreen may be a screen area that has a preset width range and that includes a screen edge of the touchscreen, or may be a screen area that is at a specified distance from a screen edge of the touchscreen, has a preset width range, and is located within the touchscreen or beyond the touchscreen.

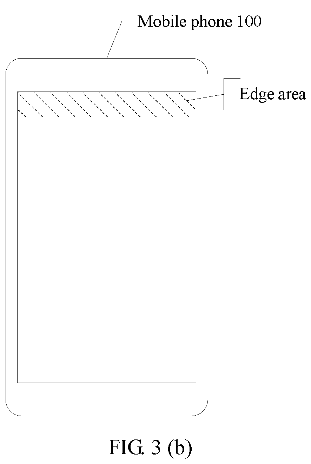

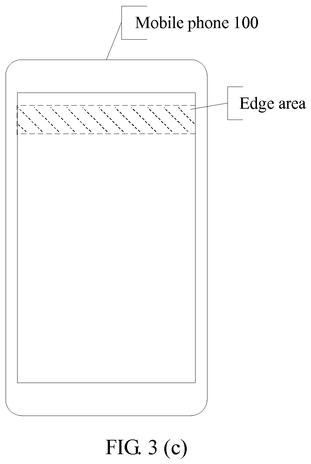

For example, the screen locking solution provided in some embodiments of the present invention is applied to the mobile phone 100 shown in FIG 1. FIG 3 (a), FIG 3 (b), FIG 3 (c), and FIG 3 (d) respectively show examples of an edge area on the touchscreen 140 of the mobile phone 100. FIG 3 (a) and FIG 3 (b) show examples of an edge area that includes a screen edge of the touchscreen 140. FIG 3 (c) shows an example of an edge area that is located within the touchscreen of the touchscreen 140. FIG 3 (d) shows an example of an edge area on the touchscreen 140 that is located beyond the touchscreen 140.

A "sliding operation" described in this application is specifically understood as a sliding operation that is performed from an "edge" of the touchscreen to a central area on the touchscreen. Specifically, a typical example of a touch object used to touch the touchscreen (or may be considered as performing the sliding operation) may include a finger, a stylus, an indicator, and the like, and the touch object may specifically perform the sliding operation through single-point touch (for example, one-finger touch), or through multi-point simultaneous touch (for example, multi-finger touch).

In some embodiments of the present invention, the terminal with the touchscreen may be specifically configured to include a plurality of software components or a combination of software and hardware, to detect touch performed on the touchscreen and perform various operations related to touch, for example, determining whether touch occurs (such as, detecting a finger press event), determining whether touch moves and tracking the movement on the entire touchscreen (such as, detecting one or more finger sliding events), and determining whether touch is terminated (such as, detecting a finger up event or touch interruption).

For example, referring to the foregoing descriptions of the mobile phone 100 shown in FIG 1, the mobile phone 100 specifically includes components such as a touchscreen 140 and a processor 180. The touchscreen 140 may be specifically configured as a display panel 141 and a touch panel 142, and the touch panel 142 may include two parts: a touch detection apparatus and a touch controller. Specifically, the touch detection apparatus may be configured to: detect touch performed on the touchscreen, such as detecting a touch position, an orientation, a posture, pressure, and the like, and transmit a detected signal to the touch controller. The touch controller receives touch information from the touch detection apparatus, and converts the touch information into information that can be processed by the processor 180, and then sends the touch information to the processor 180 (for example, converts detected touch on the touchscreen and movement of touch on the touchscreen into information that can be processed by the processor 180), and the processor 180 determines a subsequent processing procedure based on the received information (for example, the information triggers execution of a specified procedure).

In some embodiments of the present invention, step 201 that when the terminal with the touchscreen detects that a sliding operation performed on one edge of the touchscreen is not released, a sliding operation is performed from another edge of the touchscreen may be specifically configured as an event used to trigger the terminal to select and lock a partial display area on the touchscreen based on the sliding operation.

Considering user perception, in actual application, the event described in step 201 in some embodiments of the present invention may be specifically represented as a plurality of cases. For example, the mobile phone 100 shown in FIG 1 is still used as an example. During operation of the touchscreen 140, the touchscreen 140 of the mobile phone 100 or touchscreen software configured in the mobile phone 100 may continuously detect whether sliding operations are performed from four edges of the touchscreen 140. It is assumed that a touch object used to perform the sliding operation is a user finger. FIG 4 (a) and FIG 4 (b) respectively show example cases of step 201 in actual application according to some embodiments of the present invention.

In the example case shown in FIG 4 (a), a user first performs an outside-in sliding operation 1 from a screen edge a of the touchscreen 140 of the mobile phone 100 by using a finger 1. If the user performs, when the user does not release the action performed by using the finger 1 (which may also be understood as that the finger does not leave the touchscreen), an outside-in sliding operation 2 from another screen edge b of the touchscreen 140 by using a finger 2, for the mobile phone 100, it is determined that, in this case, the event described in step 201 occurs, to be specific, when a sliding operation performed from one edge of the touchscreen is not released, a sliding operation is performed from another edge of the touchscreen. Therefore, it is determined that a user operation triggers a procedure in which the terminal selects and locks a partial display area on the touchscreen based on the sliding operation.

In the example case shown in FIG 4 (b), a user simultaneously performs outside-in sliding operations from a screen edge a and a screen edge b of the touchscreen 140 respectively by using a finger 1 and a finger 2. If neither the two sliding operations is released, for the mobile phone 100, it may be determined that the event described in step 201 occurs in this case, and further, it may be determined that a user operation triggers a procedure in which the terminal selects and locks a partial display area on the touchscreen based on the sliding operation.

Specifically, in some embodiments of the present invention, when the terminal with the touchscreen detects that a sliding operation performed from one edge of the touchscreen is not released, if a sliding operation is performed from another edge of the touchscreen, execution of the procedure of selecting and locking a partial display area on the touchscreen based on the sliding operation is triggered. The procedure may be specifically step 202 and step 203 shown in FIG 2.

Step 202: The terminal selects a to-be-locked area on the touchscreen based on the first edge and the second edge of the touchscreen and respective touch point positions at which the first sliding operation and the second operation stop on the touchscreen.

Step 203: The terminal locks the to-be-locked area.

That a sliding operation "stops" described in this application is specifically an event that the terminal cannot continue to detect that a touch object that performs the sliding operation moves on the touchscreen. Typical examples include: The touch object stops moving on the touchscreen, touch of the touch object on the touchscreen is interrupted, or the touch object leaves the touchscreen. Before the sliding operation "stops", a touch point position of the sliding operation on the touchscreen changes, and after the sliding operation "stops", the touch point position of the sliding operation on the touchscreen does not change any longer.

Specifically, a stopping time sequence of the first sliding operation and the second sliding operation is not limited in descriptions of this application, and the first sliding operation and the second sliding operation may simultaneously stop, or may successively stop. For example, the first sliding operation stops first, and the second sliding operation keeps sliding for specific duration before stopping.

Specifically, in some embodiments of the present invention, when performing step 202, the terminal determines, based on the first edge of the touchscreen and the touch point position at which the first sliding operation stops on the touchscreen, a to-be-locked area selected by the first sliding operation, and determines, based on the second edge of the touchscreen and the touch point position at which the second sliding operation stops on the touchscreen, a to-be-locked area selected by the second sliding operation, so that the to-be-locked area selected by the first sliding operation and the to-be-locked area selected by the second sliding operation may jointly constitute the selected to-be-locked area on the touchscreen.

In some embodiments of the present invention, a specific manner used by the terminal to determine, based on the first edge of the touchscreen and the touch point position at which the first sliding operation stops on the touchscreen, the to-be-locked area selected by the first sliding operation may include but is not limited to the following.

The terminal first determines the touch point position at which the first sliding operation stops on the touchscreen; the terminal further determines, based on the touch point position, a straight line that is parallel to the first edge and that passes through the touch point position; and further, the terminal may obtain, based on the determined straight line, the first edge, and other edges of the touchscreen, a closed area formed by the straight line and the edges. The closed area may be used as the to-be-locked area (a first closed area) selected by the first sliding operation.

Correspondingly, in some embodiments of the present invention, the to-be-locked area selected by the second sliding operation and determined by the terminal based on the second edge of the touchscreen and the touch point position at which the second sliding operation stops on the touchscreen may be specifically a closed area (a second closed area) formed by the second edge, a straight line that is parallel to the second edge and that passes through the touch point position at which the second sliding operation stops on the touchscreen, and other edges of the touchscreen.

For example, the mobile phone 100 shown in FIG 1 is still used as an example, and based on the example of the sliding operation shown in FIG 4 (a), FIG 5 shows an example of a to-be-locked area selected by a sliding operation according to some embodiments of the present invention.

As shown in FIG 5, for a sliding operation 1 (which is equivalent to the first sliding operation) performed from a screen edge a (which is equivalent to the first edge) of the touchscreen 140 of the mobile phone 100 by using a finger 1, it is assumed that a touch point position at which the sliding operation 1 stops on the touchscreen is a point A, and in this case, a to-be-locked area selected by the sliding operation 1 is a closed area Area 1 (which is equivalent to the first closed area) shown in FIG 5. Correspondingly, for a sliding operation 2 (which is equivalent to the second sliding operation) performed from another screen edge b (which is equivalent to the second edge) of the touchscreen 140 by using a finger 2, it is assumed that a touch point position at which the sliding operation 2 stops on the touchscreen is a point B, and in this case, a to-be-locked area selected by the sliding operation 2 is a closed area Area 2 (which is equivalent to the second closed area) shown in FIG 5. Therefore, in the example shown in FIG 5, the to-be-locked area selected by the terminal includes the closed area Area 1 and the closed area Area 2.

Specifically, for example, the mobile phone 100 is still used as an example. After the processor 180 locks the selected to-be-locked area by performing a locking procedure based on information detected by the touchscreen, the processor 180 may store position information of the currently locked area in the memory 120. Therefore, during subsequent use, for user touch information detected by the touchscreen, whether the user touches the locked area can be determined by reading the stored position information of the locked area, and further, when touch on the locked area is detected, the locked area does not respond to a screen touch operation of the user, but an unlocked area can still make a normal screen touch response based on a preset function definition.

It may be learned that the terminal selects the to-be-locked area on the touchscreen based on the first edge and the second edge of the touchscreen and the respective touch point positions at which the first sliding operation and the second sliding operation stop on the touchscreen, so that the user can flexibly select a to-be-locked display area based on a requirement by using a sliding operation performed on the touchscreen by the user. Therefore, different user screen locking requirements can be met, and user experience can be improved.

It can be further learned that the foregoing embodiment of the present invention describes only an example case in which the terminal selects a to-be-locked area based on two different edges of the touchscreen. However, for the terminal, there are more than two edges of the touchscreen. For example, the touchscreen of the mobile phone 100 shown in FIG 1 has four edges. Therefore, in some embodiments of the present invention, after triggering a procedure of selecting and locking a partial area on the touchscreen in step 201, the terminal may further detect another edge of the touchscreen other than the first edge and the second edge.

Specifically, in some embodiments of the present invention, after selecting, in step 202, the to-be-locked area on the touchscreen based on the first edge and the second edge of the touchscreen and the respective touch point positions at which the first sliding operation and the second sliding operation stop on the touchscreen, if a third sliding operation may be further performed from a third edge of the touchscreen when the terminal detects that the first sliding operation performed by the touch object does not leave the touchscreen, or the second sliding operation performed by the touch object does not leave the touchscreen, or neither the first sliding operation nor the second sliding operation performed by the touch object leaves the touchscreen, the terminal selects an additional to-be-locked area on the touchscreen based on the third edge and a touch point position at which the third sliding operation stops on the touchscreen. Further, when performing step 203, the terminal may lock the to-be-locked area determined by using step 202 and the additional to-be-locked area selected by the third sliding operation.

That "the sliding operation performed by the touch object does not leave the touchscreen" described in this application may specifically include: touch performed on the touchscreen by the touch object that performs the sliding operation is not interrupted or the touch object does not leave the touchscreen. A typical example of "leaving the touchscreen" includes a finger up event and the like.

It should be understood that, similar to the foregoing descriptions of the terms "first" and "second", "third" in this application is also merely used to distinguish one element from another. For example, the third edge may be named a fourth edge, and the first edge, the second edge, and the third edge are edges but not a same edge.

Similar to the foregoing embodiment, in some embodiments of the present invention, a specific example of the additional to-be-locked area selected by the terminal based on the third edge of the touchscreen and the touch point position at which the third sliding operation stops on the touchscreen may be a closed area (a third closed area) formed by the third edge, a straight line that is parallel to the third edge and that passes through the touch point position at which the third sliding operation stops on the touchscreen, and other edges of the touchscreen.

For example, the mobile phone 100 shown in FIG 1 is used as an example. It is assumed that four edges of the touchscreen of the mobile phone 100 are respectively a, b, c, and d. Based on the example of the sliding operation shown in FIG 4 (a), it is assumed that the user first respectively performs sliding operations from an edge a and an edge b by using a finger 1 and a finger 2, to trigger a procedure of selecting and locking a partial display area. For example, Area 1 and Area 2 in the example shown in FIG 5 constitute a selected to-be-locked area, and this is further used as an example case.

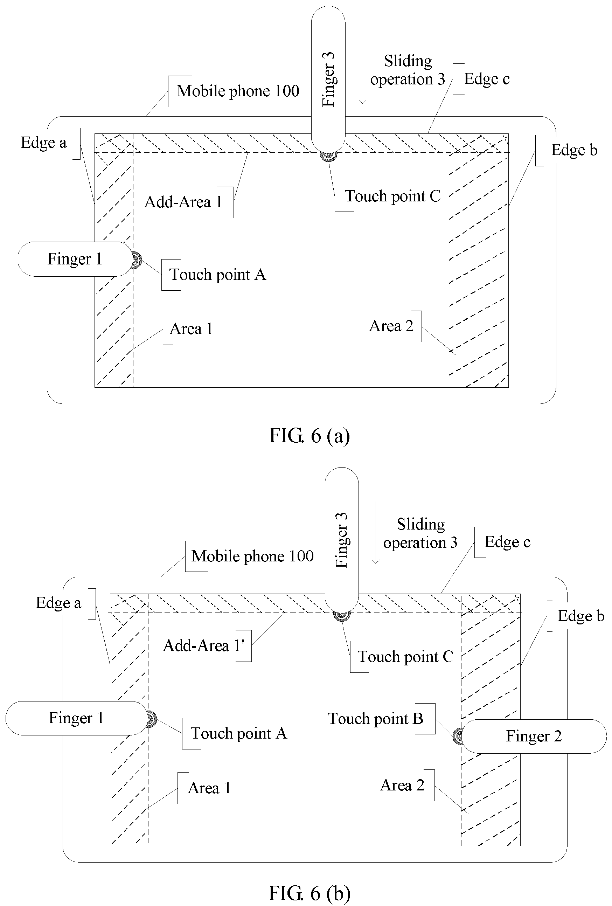

If the terminal detects, when the finger 1 does not leave the touchscreen and the finger 2 leaves the touchscreen, a sliding operation (a sliding operation 3) performed from the edge c by using a finger 3, the terminal may obtain, based on the edge c and a touch point position C at which the sliding operation 3 stops on the touchscreen, an additional to-be-locked area Add-Area 1 selected by the sliding operation 3. For example, in an example shown in FIG 6 (a), Area 1, Area 2, and Add-Area 1 jointly constitute the area locked by the terminal in step 203.

Alternatively, if the terminal detects, when neither the finger 1 nor the finger 2 leaves the touchscreen, a sliding operation 3 performed from the edge c by using a finger 3, the terminal may obtain, based on the edge c and a touch point position C at which the sliding operation 3 stops on the touchscreen, an additional to-be-locked area Add-Area 1' selected by the sliding operation 3. For example, in an example shown in FIG 6 (b), Area 1, Area 2, and Add-Area 1' jointly constitute the area locked by the terminal in step 203.

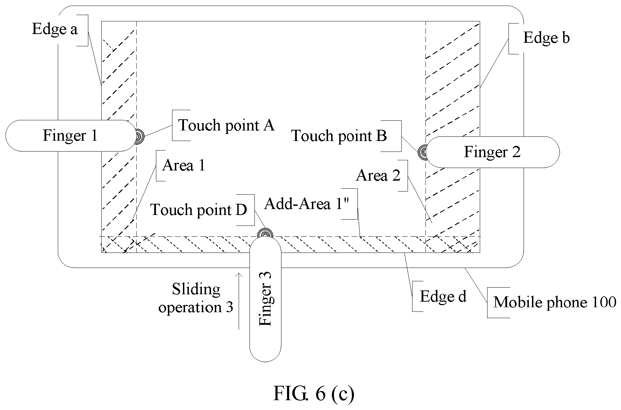

Alternatively, if the terminal detects, when neither the finger 1 nor the finger 2 leaves the touchscreen, a sliding operation 3 performed from the edge d by using a finger 3, the terminal may obtain, based on the edge d and a touch point position D at which the sliding operation 3 stops on the touchscreen, an additional to-be-locked area Add-Area 1" selected by the sliding operation 3. For example, in an example shown in FIG 6 (c), Area 1, Area 2, and Add-Area 1" jointly constitute the area locked by the terminal in step 203.

Further, in some embodiments of the present invention, after the terminal selects the additional to-be-locked area on the touchscreen based on the third edge and the touch point position at which the third sliding operation stops on the touchscreen, if a fourth sliding operation is performed from a fourth edge of the touchscreen when the terminal detects that any one or more of the first sliding operation, the second sliding operation, and the third sliding operation performed by the touch object does not leave the touchscreen, the terminal may further select another additional to-be-locked area on the touchscreen based on the fourth edge and a touch point position at which the fourth sliding operation stops on the touchscreen. Further, when performing step 203, the terminal may lock the to-be-locked area determined by using step 202, the additional to-be-locked area selected by the third sliding operation, and the additional to-be-locked area selected by the fourth sliding operation.

It should be understood that, similar to the foregoing descriptions of the terms "first", "second", and "third", "fourth" in this application is merely used to distinguish one element from another. For example, the fourth edge may be named a fifth edge, and the first edge, the second edge, the third edge, and the fourth edge are edges but not a same edge.

Similar to the foregoing embodiment, in some embodiments of the present invention, a specific example of the additional to-be-locked area selected by the terminal based on the fourth edge of the touchscreen and the touch point position at which the fourth sliding operation stops on the touchscreen may be a closed area (a fourth closed area) formed by the fourth edge, a straight line that is parallel to the fourth edge and that passes through the touch point position at which the fourth sliding operation stops on the touchscreen, and other edges of the touchscreen.

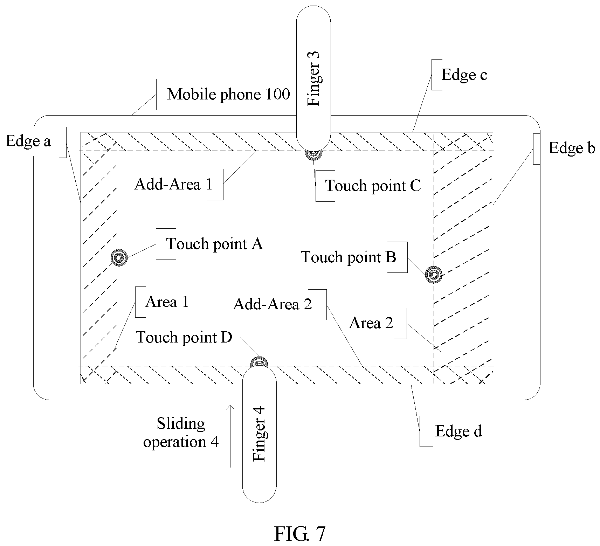

For example, the mobile phone 100 shown in FIG 1 is still used as an example. Four edges of the touchscreen of the mobile phone 100 are respectively a, b, c, and d. Based on the example of the sliding operation shown in FIG 4 (a), it is assumed that the user first respectively performs sliding operations from the edge a, the edge b, and the edge c by using a finger 1, a finger 2, and a finger 3, to trigger selection of a partial display area, and selects Area 1, Area 2, and Add-Area 1 as to-be-locked areas, to be further used as an example case. If the terminal detects, when the finger 3 does not leave the touchscreen and both the finger 1 and the finger 2 leave the touchscreen, a sliding operation (a sliding operation 4) performed from the edge d by using a finger 4, the terminal may obtain, based on the edge d and a touch point position D at which the sliding operation 4 stops on the touchscreen, an additional to-be-locked area Add-Area 2 selected by the sliding operation 4. For example, in an example shown in FIG 7, Area 1, Area 2, Add-Area 1, and Add-Area 2 jointly constitute the area locked by the terminal in step 203.

It should be understood that although only an example case of a touchscreen with four edges is related in the foregoing embodiment of the present invention, persons skilled in the art can easily figure out application of the technical solutions provided in this embodiment of the present invention in a terminal whose touchscreen has more or fewer edges.

It may be learned that, in the screen locking solution provided in the foregoing embodiment of the present invention, the to-be-locked area finally locked by the terminal in step 203 may specifically include to-be-locked areas selected by the terminal based on sliding operations performed from any two screen edges of the touchscreen, and may further include a to-be-locked area additionally selected by a sliding operation that is performed from any one or more edges of the touchscreen and that is detected by the terminal based on the two sliding operations. Therefore, in the screen locking solution provided in the foregoing embodiment of the present invention, the user can quite flexibly select the to-be-locked display area based on a requirement by using different sliding operations performed on the touchscreen. Therefore, different user screen locking requirements can be met, and user experience can be improved.

It should be understood that, in the foregoing embodiment of the present invention, during constitution of a closed area based on an edge of the touchscreen and a sliding operation corresponding to the edge, a straight line that is parallel to the edge and that passes through a touch point position at which the sliding operation stops on the touchscreen is used. In some other embodiments of the present invention, a curve or a wavy line that passes through the touch point position at which the sliding operation stops on the touchscreen may be used, or a line type may be set by the user independently, so as to enrich user experience.

In some embodiments of the present invention, considering user perception, for a specific process of selecting the to-be-locked area by the terminal by performing step 202, the terminal may start to select the to-be-locked area when triggering execution of step 202 by using step 201 starts, and in a process in which movement of the sliding operation on the touchscreen can be continuously detected, the terminal dynamically selects a display area on the touchscreen as the touch object moves, and does not select, as a to-be-locked area corresponding to the slipping operation, the display area selected in this case until the slipping operation leaves the touchscreen. Specifically, for example, the mobile phone 100 shown in FIG 1 is used as an example. An area selected by the sliding operation 1 that is performed from the edge a may be a rectangular area that starts from the screen edge a and that changes with a touch point position at which the sliding operation 1 is performed on the touchscreen, and a rectangular area selected when the sliding operation 1 leaves the touchscreen is fixed as a to-be-locked area selected by the sliding operation 1.

Considering user experience, in some embodiments of the present invention, selection of the to-be-locked area is started when triggering execution of step 202 by using step 201 starts, and in a process of continuously detecting that the sliding operation moves on the touchscreen, and in a process in which movement of the sliding operation on the touchscreen can be continuously detected, the display area on the touchscreen is dynamically selected as the touch object moves. In this case, a coverage layer corresponding to the selected display area is created for the display area dynamically selected in the foregoing process. The coverage layer may be specifically above the selected display area, so that the selected area can be intuitively displayed to the user in a user interface in real time. The coverage layer is in any one of the following forms: a transparent layer, a translucent layer, a translucent layer in an animation effect, a translucent layer with a touch lock guidance message, or a translucent layer with visual information.

Further, after the to-be-locked area is selected in step 202, display of the coverage layer corresponding to the selected to-be-locked area may be kept in specified duration, to prompt the user with the to-be-locked area selected by the user. After the selected to-be-locked area is locked in step 203, the coverage layer is deleted.

For example, the mobile phone 100 shown in FIG 1 is still used as an example. When a sliding operation performed on the touchscreen triggers selection of the to-be-locked area on the touchscreen, a special display effect (such as a translucent gray effect or a white effect) may be used for any rectangular area formed based on a finger and an edge at which a finger sliding operation is detected, to represent a selected to-be-locked area. Before the finger is lifted, the selected area may synchronously change (for example, the selected area may constantly move inward or outward) with finger sliding, to adjust a size of a selected display area. After a finger is lifted, a to-be-locked area corresponding to this touch sliding operation is determined. After all sliding fingers are lifted, all selected to-be-locked areas are determined. An area displayed in a special effect may be delayed for a short period of time (such as, half a second), to prompt an area locked by the user. Then, special effect display may be canceled, previous display may be restored, and the selected areas on the touchscreen are locked.

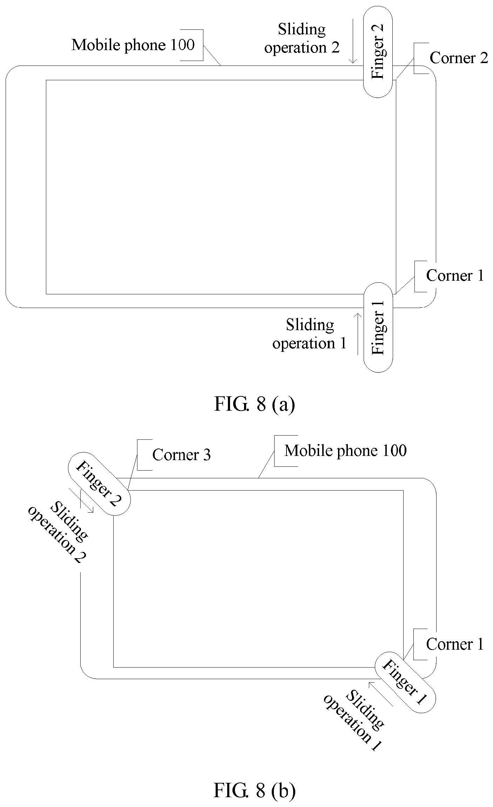

Considering that the to-be-locked area is mainly selected based on the sliding operation performed by the user in this embodiment of the present invention, there are a plurality of possible cases of a user operation in actual application operations, such as, the cases shown in FIG 4 (a) and FIG 4 (b) that outside-in sliding is performed from an edge area, or in some cases, a user operation may be a user sliding operation shown in FIG 8 (a) that is used as an example of sliding from two adjacent ends (two adjacent ends included by any screen edge of the touchscreen) of the touchscreen to the middle, or a user sliding operation shown in FIG 8 (b) that is used as an example of sliding from two diagonally opposite ends (two diagonal ends of the touchscreen) of the touchscreen to the middle.

Therefore, considering the example cases shown in FIG 8 (a) and FIG 8 (b), to enrich user operation experience, as an extension of the foregoing manner, in some embodiments of the present invention, a recognition area with a preset size may be further set at a position of a touchscreen edge at a corner, so that when it is determined in step 201 that sliding operations are performed from different corners of the touchscreen, a to-be-locked area may be selected based on a to-be-locked area selection rule similar to that in the foregoing embodiment.

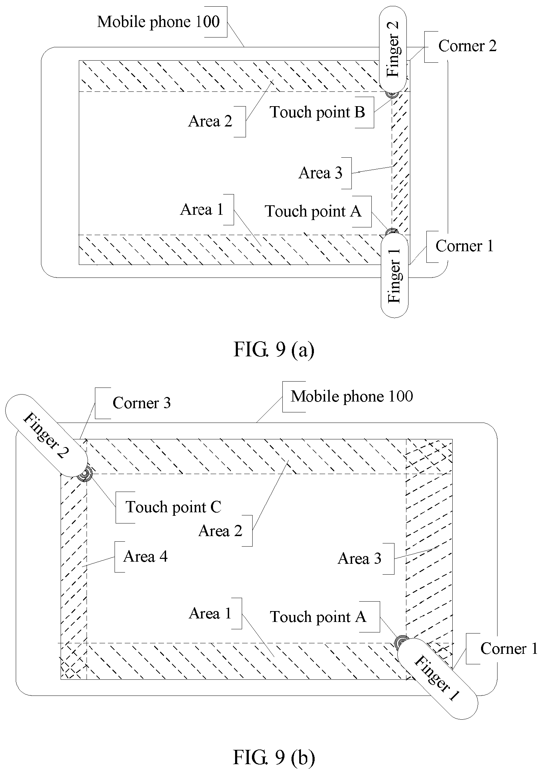

Specifically, for example, based on the example case shown in FIG 8 (a), FIG 9 (a) shows an example case of selecting a to-be-locked area according to some embodiments of the present invention. A to-be-locked area selected by sliding operations performed from two adjacent ends (such as a corner 1 and a corner 2 in the figure) of the touchscreen to the middle may be equivalent to a to-be-locked area selected by sliding operations performed from edges b, c, and d of the touchscreen to the middle.

For another example, based on the example case shown in FIG 8 (b), FIG 9 (b) shows an example case of selecting a to-be-locked area according to some embodiments of the present invention. A to-be-locked area selected by sliding operations performed from two opposite ends (such as a corner 1 and a corner 3 in the figure) of the touchscreen to the middle may be equivalent to a to-be-locked area selected by sliding operations performed from edges a, b, c, and d of the touchscreen to the middle.

In addition, in some embodiments of the present invention, considering that the user may be not satisfied with an area range selected in one to-be-locked area selection process, after locking the selected to-be-locked area, the user may still trigger selection of an unlocked area on the touchscreen again in a manner that is the same as that in the foregoing embodiment of the present invention, so that a new to-be-locked area is added, or the existing to-be-locked area is adjusted.

Further, adjusting the to-be-locked area before the to-be-locked area is locked may further include: deleting the selected to-be-locked area (the deletion herein may also be understood as lock cancellation). For example, a part of the selected to-be-locked area or the entire selected to-be-locked area may be deleted in the following manner.

If an operation used to delete a part of the selected to-be-locked area or the entire selected to-be-locked area is detected in specified duration, locking of the to-be-locked area corresponding to the operation may be terminated in response to the operation, and the operation may be a preset touch operation or a preset key pressing instruction.

In some embodiments of the present invention, after locking the selected to-be-locked area by using the procedure shown in FIG 2, when touch that is not corresponding to a preset unlock operation and that is on a locked area on the touchscreen is detected, the touchscreen is further prevented from responding to the touch, and a coverage layer corresponding to the locked area is further created, to remind the user that a touched area is the locked area. The coverage layer may be displayed for preset duration, or may be deleted in response to an event that the touch leaves the touchscreen. When it is detected that the preset unlock operation is performed, the locked area on the touchscreen may be unlocked. The preset unlock operation may include operations such as a smart key association function, a touch operation, a key pressing operation, a voice operation, and gesture sensing.

In some embodiments of the present invention, in terms of a display effect, if the user touches a locked display area, the locked display area may be displayed by using a special effect (such as creating a translucent gray coverage layer or a white coverage layer), to remind the user that the current operation is performed in the locked display area, does not take effect, and gets no response. In addition, the user is prompted with a position of the locked display area by using this effect. When a user finger leaves the locked display area, the special effect may be canceled accordingly, to respond to leaving of the user finger.

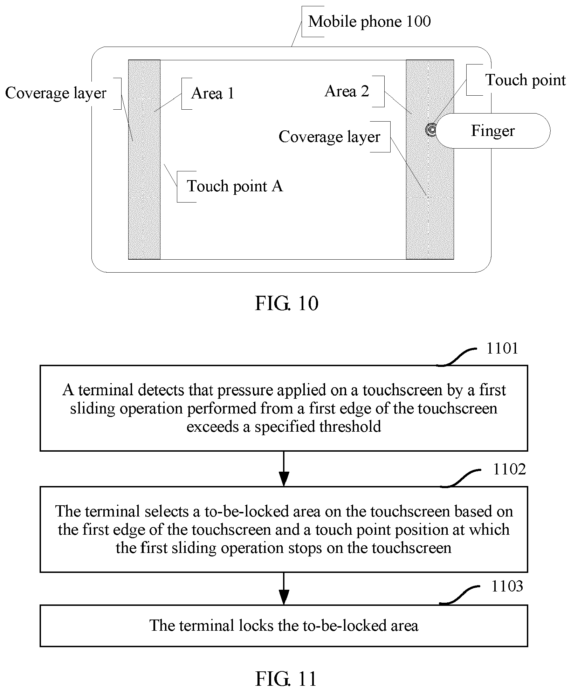

For example, based on the selected to-be-locked area shown in FIG 5, after this area is locked, the touchscreen no longer responds to touch on this area. FIG 10 shows an example case that occurs after a locked area is touched according to some embodiments of the present invention. It may be learned that, in the example shown in FIG 10, the touchscreen does not respond to touch on a locked area, and prompts, by creating a translucent coverage layer, the user that a user operation is performed in the locked area. It should be understood that FIG 10 is only a typical example of prompting the user with the locked area, and in actual application, the user may also be prompted, by using a pop-up window, a voice, or a combination of a plurality of effects, that a current operation is performed in the locked area.

In some embodiments of the present invention, the user may also set the locked area by using the foregoing method, to set permission of an application in the locked area. For an application that is set in the locked area, the user may set an additional password or gesture to trigger the corresponding application. For example, the user may place an application with a high privacy level or a high security level in a specified locked area, so that another person cannot directly enter some applications, or a corresponding password or gesture is required when some applications in the locked area are triggered. In this manner, a child can be prevented from accidentally making a call or accidentally sending a message when playing a mobile phone, or a payment behavior not desired by the user can be prevented. The permission of the application in the locked area is not specifically limited in this embodiment of the present invention.

In conclusion, in the screen locking method provided in some embodiments of the present invention, when the terminal with the touchscreen detects that the sliding operation performed from one edge of the touchscreen is not released, the sliding operation is performed from another edge of the touchscreen, and in this case, the to-be-locked area on the touchscreen is selected and locked based on the two edges of the touchscreen and the respective touch point positions at which the two sliding operations stop on the touchscreen. It may be learned that the foregoing embodiment of the present invention provides a screen locking solution of triggering partial screen locking based on the sliding operation, and a screen locking area is selected based on the sliding operation, so that the user can independently select and lock the to-be-locked area, thereby improving user experience.

In the screen locking solution provided in this embodiment of the present invention, the user can trigger selection and locking of a partial display area on the touchscreen by performing the sliding operation on the touchscreen, and the user is allowed to flexibly select and lock a display area on the touchscreen based on a requirement by performing the sliding operation on the touchscreen. Therefore, it may be learned that, in the technical solution provided in this embodiment of the present invention, not only a screen can be partially locked, but the user is also allowed to flexibly select and adjust a to-be-locked display area on the touchscreen based on a requirement. Therefore, compared with an existing screen locking technical solution, this technical solution is more flexible, both screen locking experience and device holding experience of the user are improved, and especially for a handheld device with a larger touchscreen area, disadvantages of a small holding area and poor holding experience can be overcome.

Based on a same technical conception, some other embodiments of the present invention further provide a screen locking method. FIG 11 is a schematic flowchart of a screen locking method according to some other embodiments of the present invention.

Similar to the procedure of the screen locking method shown in FIG 2, the procedure shown in FIG 11 may be implemented by using software programming or a combination of software and hardware, and may be specifically implemented on a terminal with a touchscreen, for example, on a mobile phone 100 with a touchscreen 140 shown in FIG 1.

As shown in FIG 11, the procedure of the screen locking method provided in some other embodiments of the present invention includes the following steps.

Step 1101: The terminal detects that pressure applied on the touchscreen by a first sliding operation performed from a first edge of the touchscreen exceeds a specified threshold.

Step 1102: The terminal selects a to-be-locked area on the touchscreen based on the first edge of the touchscreen and a touch point position at which the first sliding operation stops on the touchscreen.

Step 1103: The terminal locks the to-be-locked area.

For details about an "edge" of the touchscreen, refer to descriptions of the "edge" in the foregoing embodiment. Details are not described herein again.

It may be learned that, in the schematic procedure shown in FIG 11, an event used to trigger the terminal to select the to-be-locked area based on the sliding operation is that the pressure applied on the touchscreen by the sliding operation on the touchscreen exceeds the specified threshold.

For example, referring to the foregoing descriptions of the touchscreen 140 of the mobile phone 100 shown in FIG 1, the touchscreen may be configured as a display panel and a touch panel, so that a touched position, a touched area, touch pressure, a touch capacitance, and the like are detected, and a capacitance change, a pressure change, and the like caused by touch input (such as a touch sliding operation performed from an edge area on the touchscreen) exerted on the touchscreen may be converted into an electrical input signal. Specifically, when the touch input is detected by using a touch detection apparatus, a corresponding signal may be transmitted to a touch controller. The touch controller may process the received signal, and then send corresponding data to the controller.

Specifically, in the schematic procedure shown in FIG 11, there may be a plurality of cases for the event used to trigger the terminal to select the to-be-locked area based on the sliding operation. For example, the mobile phone 100 shown in FIG 1 is still used as an example. During operation of the touchscreen 140, the touchscreen 140 or touchscreen software of the mobile phone 100 may continuously detect outside-in sliding actions performed by fingers from four edges of the touchscreen 140 and pressure applied on the touchscreen 140 by the actions.

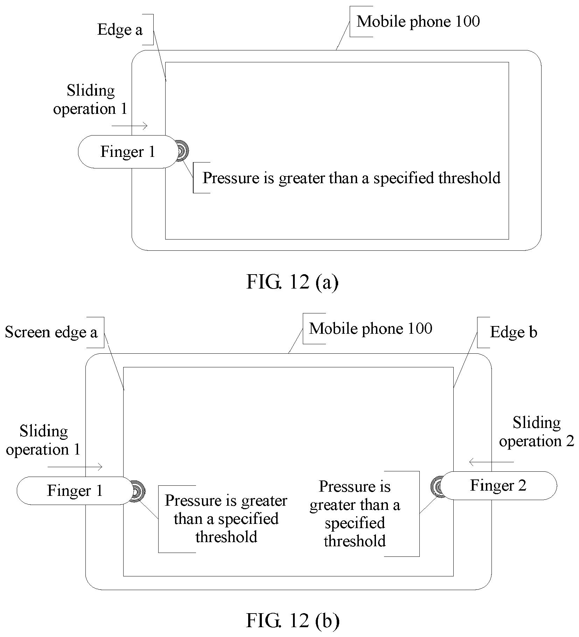

In an example case, such as an example case, shown in FIG 12 (a), of triggering to select a to-be-locked display area on a touchscreen based on a user operation in some embodiments of the present invention, when an outside-in sliding operation performed from a screen edge (such as an edge a shown in FIG 12 (a)) of the touchscreen 140 is detected, and pressure applied on the touchscreen 140 by the sliding operation exceeds a preset pressure threshold, it may be determined that the terminal is triggered to select the to-be-locked area based on the sliding operation of the user.

In another example case, such as another example case, shown in FIG 12 (b), of triggering to select a to-be-locked display area on a touchscreen based on a user operation in some embodiments of the present invention, the user may simultaneously or successively start to perform outside-in sliding operations from any two or more screen edges (such as an edge a and an edge b shown in FIG 12 (b)) of the touchscreen 140, if pressure applied on the touchscreen 140 by any one or both the two sliding operations exceeds a preset pressure threshold, it may be determined that the terminal is triggered to select the to-be-locked area based on the sliding operation of the user.

It should be noted that the event used to trigger the terminal to select the to-be-locked area based on the sliding operation is not limited to the foregoing two example cases, and any possible case in which a sliding operation is performed on the touchscreen and pressure applied by the sliding operation exceeds a threshold may be designed to trigger the terminal to select the to-be-locked area based on the sliding operation. In some example cases, the terminal may further be designed, with reference to another screen feature of the touchscreen (for example, with reference to a position or a speed), to trigger selection of the to-be-locked area based on the sliding operation. This is not described in detail in the present invention.

It may be learned that a main difference between the method procedure shown in FIG 11 and the method procedure shown in FIG 2 is that events used to trigger the terminal to select the to-be-locked area based on the sliding operation are different. In the method procedure shown in FIG 2, the event used to trigger the terminal to select the to-be-locked area based on the sliding operation is that at least one sliding operation (such as step 201 shown in FIG 2) is performed from a different edge of the touchscreen when at least one sliding operation performed from an edge of the touchscreen is not released. In the method procedure shown in FIG 11, the event used to trigger the terminal to select the to-be-locked area based on the sliding operation is that pressure applied on the touchscreen by any sliding operation exceeds a specified threshold (such as step 1101 in FIG 11). Therefore, for the procedure shown in FIG 2 or FIG 11, after the event used to trigger the terminal to select the to-be-locked area based on the sliding operation occurs, the terminal may subsequently select the to-be-locked area based on the sliding operation by using a similar process, for example:
In some embodiments of the present invention, in step 1102, the terminal may determine, in but without being limited to the following manner, the to-be-locked area selected by the first sliding operation detected in step 1101: The terminal uses a first closed area formed by the first edge, a straight line that is parallel to the first edge and that passes through the touch point position at which the first sliding operation stops on the touchscreen, and other edges of the touchscreen as a to-be-locked area selected by the first sliding operation.

It may be learned that, in the foregoing manner, the selected to-be-locked area is mainly determined by the sliding operation performed by the user on the touchscreen, so that the to-be-locked area can be flexibly selected.

Correspondingly, in some embodiments of the present invention, after the terminal triggers, by using step 1101, a procedure of selecting and locking a partial area on the touchscreen, the terminal may further detect another edge of the touchscreen other than the first edge.

Specifically, in some embodiments of the present invention, after the terminal selects, by using step 1102, the to-be-locked area based on the first edge and the touch point position at which the first sliding operation stops on the touchscreen, when detecting a second sliding operation performed from a second edge of the touchscreen, the terminal may further select, based on the second edge and a touch point position at which the second sliding operation stops on the touchscreen, an additional to-be-locked area selected by the second sliding operation on the touchscreen. Further, when performing step 1103, the terminal may lock the to-be-locked area determined by using step 1102 and the additional to-be-locked area selected by the second sliding operation.

Similar to the foregoing embodiment, in some embodiments of the present invention, a specific example of the additional to-be-locked area selected by the terminal based on the second edge of the touchscreen and the touch point position at which the second sliding operation stops on the touchscreen may be a closed area (a second closed area) formed by the second edge, a straight line that is parallel to the second edge and that passes through the touch point position at which the second sliding operation stops on the touchscreen, and other edges of the touchscreen.

For example, similar to the foregoing embodiment, the mobile phone 100 shown in FIG 1 is used as an example.

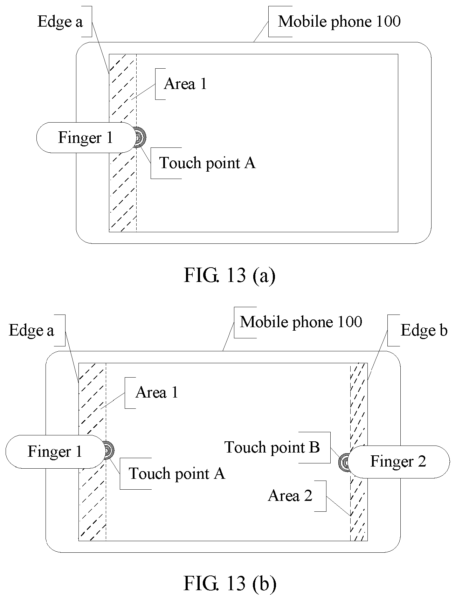

Based on the example case of the sliding operation shown in FIG 12 (a), FIG 13 (a) shows an example case of a to-be-locked area according to some embodiments of the present invention. It may be learned that a to-be-locked area Area 1 selected by a sliding operation 1 performed from an edge a is a closed rectangular area starting from the edge a and ending at a straight line that is parallel to the edge a and that passes through a touch point A at which the sliding operation 1 stops on the touchscreen. Area 1 constitutes the selected to-be-locked area.

Based on the example case of the sliding operation shown in FIG 12 (b), FIG 13 (b) shows an example case of a to-be-locked area according to some embodiments of the present invention. It may be learned that a to-be-locked area Area 1 selected by a sliding operation 1 performed from an edge a is a closed rectangular area starting from the edge a and ending at a straight line that is parallel to the edge a and that passes through a touch point A at which the sliding operation 1 stops on the touchscreen, and a to-be-locked area Area 2 selected by a sliding operation 2 performed from an edge b is a closed rectangular area starting from the edge b and ending at a straight line that is parallel to the edge b and that passes through a touch point position B at which the sliding operation 2 stops on the touchscreen. Area 1 and Area 2 constitute the selected to-be-locked area.

It may be learned that, in the screen locking solution provided in the foregoing embodiment of the present invention, the to-be-locked area may be determined based on a sliding operation that is performed on any edge of the touchscreen and that applies pressure exceeding a preset pressure threshold, and the sliding operation may be performed from any one or more edges of the touchscreen.

Similar to the foregoing embodiment, for different positions of a touchscreen edge on which the sliding operation is performed, a manner of selecting the to-be-locked area based on the sliding operation and the touchscreen edge may also be correspondingly adjusted.

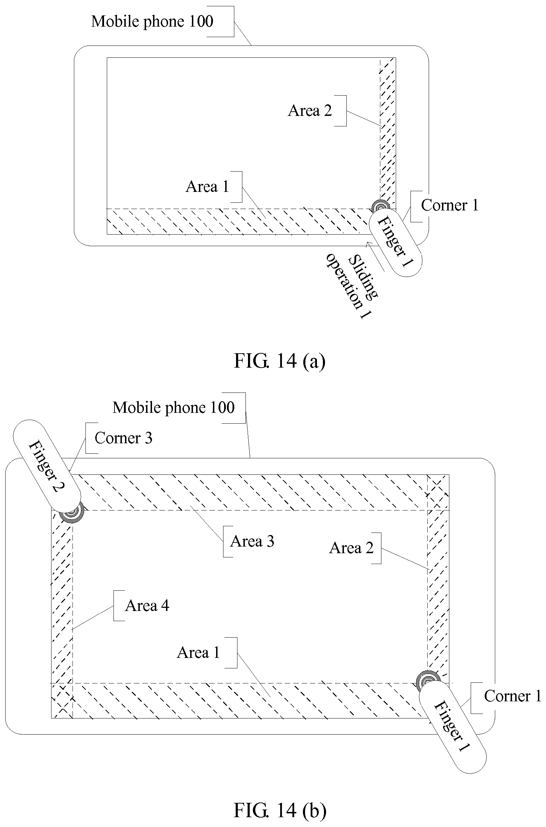

For example, FIG 14 (a) shows an example case of a selected to-be-locked area according to some embodiments of the present invention. An area selected by a sliding operation that is performed from an adjacent end (a corner 1 shown in the figure) of the touchscreen to the middle and that applies pressure exceeding a preset pressure threshold may be set to be similar to an area selected by sliding operations that are performed from edges a and b of the touchscreen to the middle and that apply pressure exceeding the preset pressure threshold. FIG 14 (b) shows an example case of a selected to-be-locked area according to some embodiments of the present invention. An area selected by sliding operations that are performed from two opposite ends (such as a corner 1 and a corner 3 in the figure) of the touchscreen to the middle and that apply pressure exceeding the preset pressure threshold may be set to be similar to an area selected by sliding operations that are performed from four edges a, b, c, d of the touchscreen to the middle and that apply pressure exceeding the preset pressure threshold.

Similar to the foregoing embodiment, in some embodiments of the present invention, after the to-be-locked area is selected by using step 1102 in the procedure shown in FIG 11, before the selected to-be-locked area is locked in step 1103, it may be further determined whether an operation used to delete a part of the selected to-be-locked area or the entire selected to-be-locked area is performed. If it is detected that the operation is performed, locking of an area corresponding to the operation is terminated in response to the operation. The operation used to delete a part of the selected to-be-locked area or the entire selected to-be-locked area may be a preset touch operation or a preset key pressing instruction.

Similar to the foregoing embodiment, in some embodiments of the present invention, a coverage layer corresponding to the selected to-be-locked area is created for the to-be-locked area selected in the foregoing process. The coverage layer may be any one the following: a translucent layer, a translucent layer in an animation effect, a translucent layer with a touch lock guidance message, or a translucent layer with visual information. After the selected to-be-locked area is locked in step 1103, the coverage layer is deleted. For details, refer to descriptions in the foregoing embodiment.

In conclusion, in the screen locking method provided in some other embodiments of the present invention, when the terminal with the touchscreen detects that pressure applied on the touchscreen by a sliding operation that is performed from an edge of the touchscreen exceeds the specified threshold, the to-be-locked area on the touchscreen is selected and locked based on the edge of the touchscreen and a touch point position at which the sliding operation stops on the touchscreen. It may be learned that the foregoing embodiment of the present invention can provide a screen locking solution of triggering partial screen locking based on sliding operation pressure, and a screen locking area is selected based on the sliding operation, so that the user can independently select and lock the to-be-locked area, thereby improving user experience. Therefore, in the screen locking solution provided in the foregoing embodiment of the present invention, a screen can be partially locked, and the user is allowed to flexibly select and adjust a to-be-locked display area on the touchscreen based on a requirement. Therefore, compared with an existing screen locking technical solution, this technical solution is more flexible, both screen locking experience and device holding experience of the user are improved, and especially for a handheld device with a larger touchscreen area, disadvantages of a small holding area and poor holding experience can be overcome.

Based on a same technical conception, some embodiments of the present invention further provide a terminal, and the terminal may implement a procedure of the screen locking method embodiment shown in FIG 2. For example, the terminal provided in some embodiments of the present invention may be specifically implemented as the mobile phone 100 shown in FIG 1.

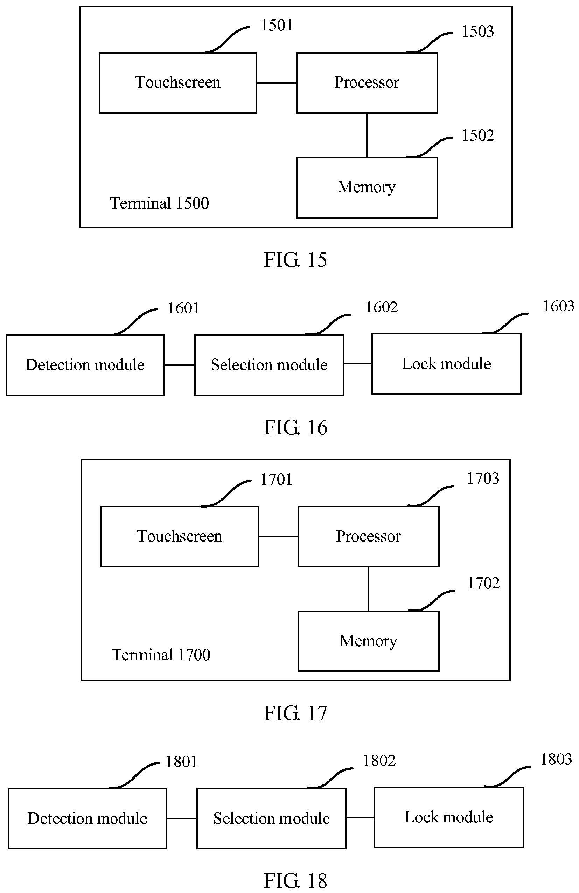

FIG 15 is a schematic structural diagram of a terminal according to some embodiments of the present invention. As shown in FIG 15, the terminal includes a touchscreen 1501, a memory 1502, and a processor 1503.

Specifically, the processor 1503 is coupled to the touchscreen 1501.

The touchscreen 1501 may be specifically configured to display a screen status of the terminal before a screen is locked, in a screen locking process, or after a screen is locked; and may be configured to sense an operation performed on the touchscreen. The memory 1502 is coupled to the processor 1503.

The memory 1502 is configured to store computer executable program code, the program code includes an instruction, and when the processor 1503 executes the instruction, the instruction enables the terminal to perform a procedure of the screen locking method embodiment shown in FIG 2 of the present invention.

It should be understood that the terminal provided in some embodiments of the present invention shown in FIG 15 may be configured to implement the procedure in the screen locking method embodiment shown in FIG 2 and procedures corresponding to some specific embodiments of the present invention of the screen locking method shown in FIG 2. For specific implementation of the procedure, refer to descriptions in the foregoing method embodiments. To avoid description redundancy, details are not described herein again in this application.

Based on a same technical conception, some embodiments of the present invention further provide a screen locking apparatus. The apparatus may be applied to a terminal with a touchscreen. Specifically, a functional module of the apparatus may be implemented by hardware, software, or a combination of software and hardware, to perform the procedure in the screen locking method embodiment shown in FIG 2.

FIG 16 is a schematic structural diagram of a terminal according to some embodiments of the present invention. It should be understood that function modules shown in FIG 16 may be combined or separated into sub-blocks to implement a principle of the present invention. Therefore, descriptions in this application may support any possible combination or separation or further limitation of the modules in this application.

As shown in FIG 16, the apparatus includes:
a detection module 1601, configured to: when detecting that a first sliding operation performed from a first edge of a touchscreen is not released, detect whether a second sliding operation is performed from a second edge of the touchscreen;
a selection module 1602, configured to: when the detection module 1601 detects the second sliding operation, select a to-be-locked area on the touchscreen based on the first edge and the second edge of the touchscreen and respective touch point positions at which the first sliding operation and the second operation stop on the touchscreen; and
a lock module 1603, configured to lock the to-be-locked area.

It should be understood that the screen locking apparatus provided in some embodiments of the present invention shown in FIG 16 may be configured to implement the procedure in the screen locking method embodiment shown in FIG 2 and procedures corresponding to some specific embodiments of the present invention of the screen locking method shown in FIG 2. For specific implementation of the procedure, refer to descriptions in the foregoing method embodiments. To avoid description redundancy, details are not described herein again in this application.

Based on a same technical conception, some embodiments of the present invention further provide a terminal, and the terminal may implement a procedure of the screen locking method embodiment shown in FIG 11. For example, the terminal provided in some embodiments of the present invention may be specifically implemented as the mobile phone 100 shown in FIG 1.

FIG 17 is a schematic structural diagram of a terminal according to some embodiments of the present invention. As shown in FIG 17, the terminal includes a touchscreen 1701, a memory 1702, and a processor 1703.

Specifically, the processor 1703 is coupled to the touchscreen 1701, the touchscreen 1701 is configured to display a screen status of the terminal before a screen is locked, in a screen locking process, or after a screen is locked, and is configured to sense an operation performed on the touchscreen, the memory 1702 is coupled to the processor 1703, the memory 1702 is configured to store computer executable program code, the program code includes an instruction, and when the processor 1703 executes the instruction, the instruction enables the terminal to perform the procedure of the screen locking method embodiment shown in FIG 11 of the present invention.

It should be understood that the terminal provided in some embodiments of the present invention shown in FIG 17 may be configured to implement the procedure in the screen locking method embodiment shown in FIG 11 and procedures corresponding to some specific embodiments of the present invention of the screen locking method shown in FIG 11. For specific implementation of the procedure, refer to descriptions in the foregoing method embodiments. To avoid description redundancy, details are not described herein again in this application.

Based on a same technical conception, some embodiments of the present invention further provide a screen locking apparatus. The apparatus may be applied to a terminal with a touchscreen. Specifically, a functional module of the apparatus may be implemented by hardware, software, or a combination of software and hardware, to perform the procedure in the screen locking method embodiment shown in FIG 11.

FIG 18 is a schematic structural diagram of a screen locking apparatus according to some embodiments of the present invention. It should be understood that function modules shown in FIG 18 may be combined or separated into sub-blocks to implement a principle of the present invention. Therefore, descriptions in this application may support any possible combination or separation or further limitation of the modules in this application.

As shown in FIG 18, the apparatus includes:
a detection module 1801, configured to detect whether pressure applied on a touchscreen by a first sliding operation performed from a first edge of the touchscreen exceeds a specified threshold;
a selection module 1802, configured to: when the detection module 1801 detects that the pressure applied on the touchscreen by the first sliding operation exceeds the specified threshold, select a to-be-locked area on the touchscreen based on the first edge of the touchscreen and a touch point position at which the first sliding operation stops on the touchscreen; and
a lock module 1803, configured to lock the to-be-locked area.

It should be understood that the screen locking apparatus provided in some embodiments of the present invention shown in FIG 18 may be configured to implement the procedure in the screen locking method embodiment shown in FIG 11 and procedures corresponding to some specific embodiments of the present invention of the screen locking method shown in FIG 11. For specific implementation of the procedure, refer to descriptions in the foregoing method embodiments. To avoid description redundancy, details are not described herein again in this application.

For software implementation, these technologies may be implemented by modules (such as a program and a function) that implement functions described herein. Software code may be stored in a memory unit and executed by a processor. The memory unit may be implemented in the processor or outside the processor.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept.

Obviously, persons skilled in the art can make various modifications and variations to the present invention without departing from the scope of the present invention. The scope of protection shall be defined by the appended claims.

## Claims

1. A screen locking method, applied to a terminal with a touchscreen, wherein the method comprises:
detecting (201), by the terminal, a first sliding operation performed by a first touch object from a first edge of the touchscreen; detecting, by the terminal, a second sliding operation performed by a second touch object from a second edge of the touchscreen before the first sliding operation is released, wherein the first edge is different from the second edge; and responsive to detecting the first sliding operation and detecting the second sliding operation before the first sliding operation is released, triggering, by the terminal, a selection and locking procedure, wherein the selection and locking procedure comprises:
selecting (202), by the terminal, a to-be-locked area on the touchscreen based on the first edge and the second edge of the touchscreen and respective touch point positions at which the first sliding operation and the second sliding operation stop on the touchscreen; and
locking (203), by the terminal, the to-be-locked area to generate a corresponding locked area;
wherein each of the first sliding operation and the second sliding operation are defined to have stopped when the terminal no longer detects movement of the corresponding touch object;
wherein after the selecting, by the terminal, a to-be-locked area on the touchscreen, the method further comprises:
setting and displaying, by the terminal, a coverage layer covering the to-be-locked area; wherein
the coverage layer is any one of the following:
a translucent layer, a translucent layer in an animation effect, a translucent layer with a touch lock guidance message, or a translucent layer with visual information; and
after the locking, by the terminal, the to-be-locked area, the method further comprises:
deleting, by the terminal, the coverage layer that covers the locked area and restoring a display in the locked area;
wherein when a touch operation that is not a preset unlock operation and that is on the locked area on the touchscreen is detected, the touchscreen does not respond to the touch operation and the coverage layer covering the to-be-locked area is displayed to indicate the locked area.

2. The method according to claim 1, wherein the to-be-locked area comprises:
a first closed area formed by the first edge, a straight line that is parallel to the first edge and that passes through the touch point position at which the first sliding operation stops on the touchscreen, and other edges of the touchscreen; and
a second closed area formed by the second edge, a straight line that is parallel to the second edge and that passes through the touch point position at which the second sliding operation stops on the touchscreen, and other edges of the touchscreen.

3. The method according to claim 1 or 2, after the selecting, by the terminal, a to-be-locked area on the touchscreen, further comprising:
when the terminal detects that at least one of the first sliding operation and the second sliding operation performed by a touch object used to touch the touchscreen does not leave the touchscreen, performing a third sliding operation from a third edge of the touchscreen;
selecting, by the terminal, a first additional to-be-locked area on the touchscreen based on the third edge and a touch point position at which the third sliding operation stops on the touchscreen; and
the locking, by the terminal, the to-be-locked area comprises:
locking, by the terminal, the to-be-locked area and the first additional to-be-locked area.

4. The method according to claim 3, wherein the first additional to-be-locked area comprises:
a third closed area formed by the third edge, a straight line that is parallel to the third edge and that passes through the touch point position at which the third sliding operation stops on the touchscreen, and the first and the second edges of the touchscreen.

5. The method according to claim 3 or 4, after the selecting, by the terminal, a first additional to-be-locked area on the touchscreen, further comprising:
when the terminal detects that any one or more of the first sliding operation, the second sliding operation, and the third sliding operation performed by the touch object used to touch the touchscreen do not leave the touchscreen, performing a fourth sliding operation from a fourth edge of the touchscreen;
selecting, by the terminal, a second additional to-be-locked area on the touchscreen based on the fourth edge and a touch point position at which the fourth sliding operation stops on the touchscreen; and
the locking, by the terminal, the to-be-locked area comprises:
locking, by the terminal, the to-be-locked area, the first additional to-be-locked area, and the second additional to-be-locked area.

6. The method according to claim 5, wherein the second additional to-be-locked area comprises:
a fourth closed area formed by the fourth edge, a straight line that is parallel to the fourth edge and that passes through the touch point position at which the fourth sliding operation stops on the touchscreen, and the first and the second edges of the touchscreen.

7. A terminal (100), wherein the terminal comprises a touchscreen (140), a memory (120), and a processor (180), the processor is coupled to the touchscreen, the touchscreen is configured to display a screen status of the terminal before a screen is locked, or in a screen locking process, or after a screen is locked, and is configured to sense an operation performed on the touchscreen, the memory is coupled to the processor, the memory is configured to store computer executable program code, the program code comprises an instruction, and when the processor executes the instruction, the instruction enables the terminal to perform the screen locking method according to any one of claims 1 to 6.

## Patentansprüche

1. Bildschirmsperrverfahren, das auf ein Endgerät mit einem Touchscreen angewandt wird, wobei das Verfahren Folgendes umfasst:
Erkennen (201) eines ersten Gleitvorgangs, durch das Endgerät, der von einem ersten Berührungsobjekt von einer ersten Kante des Touchscreens aus durchgeführt wurde; Erkennen eines zweiten Gleitvorgangs, durch das Endgerät, der von einem zweiten Berührungsobjekt von einer zweiten Kante des Touchscreens aus durchgeführt wird, bevor der erste Gleitvorgang ausgelöst wird, wobei die erste Kante von der zweiten Kante verschieden ist; und als Reaktion auf das Erkennen des ersten Gleitvorgangs und des zweiten Gleitvorgangs vor der Freigabe des ersten Gleitvorgangs, Auslösen eines Auswahl- und Sperrvorgangs durch das Endgerät, wobei der Auswahl- und Sperrvorgang Folgendes umfasst:
Auswählen (202), durch das Endgerät, eines zu sperrenden Bereichs auf dem Touchscreen, basierend auf der ersten Kante und der zweiten Kante des Touchscreens und den jeweiligen Berührungspunktpositionen, an denen der erste Gleitvorgang und der zweite Gleitvorgang auf dem Touchscreen endet; und
Sperren (203), durch das Endgerät, des zu sperrenden Bereichs, um einen entsprechenden gesperrten Bereich zu erstellen;
wobei sowohl der erste Gleitvorgang als auch der zweite Gleitvorgang als beendet definiert sind, wenn das Endgerät keine Bewegung des entsprechenden Berührungsobjekts mehr erkennt;
wobei das Verfahren nach der Auswahl, durch das Endgerät, eines zu sperrenden Bereichs auf dem Touchscreen ferner Folgendes umfasst:
Einstellen und Anzeigen einer Abdeckungsschicht, durch das Endgerät, die den zu sperrenden Bereich abdeckt; wobei
die Abdeckungsschicht zu einer der Folgenden gehört:
eine durchsichtige Schicht, eine durchsichtige Schicht in einem Animationseffekt, eine durchsichtige Schicht mit einer Anleitung zur Berührungssperre oder eine durchsichtige Schicht mit visuellen Informationen; und
nach dem Sperren des zu sperrenden Bereichs durch das Endgerät, das Verfahren ferner Folgendes umfasst:
Löschen der Abdeckungsschicht, durch das Endgerät, die den gesperrten Bereich abdeckt und Wiederherstellen der Anzeige im gesperrten Bereich;
wobei, wenn ein Berührungsvorgang, der kein voreingestellter Entsperrvorgang ist und der auf dem gesperrten Bereich auf dem Touchscreen liegt, erkannt wird, der Touchscreen nicht auf den Berührungsvorgang reagiert und die Abdeckungsschicht, die den zu sperrenden Bereich abdeckt, angezeigt wird, um den gesperrten Bereich anzuzeigen.

2. Verfahren nach Anspruch 1, wobei der zu sperrende Bereich Folgendes umfasst:
einen ersten geschlossenen Bereich, der von der ersten Kante, einer geraden Linie, die parallel zur ersten Kante verläuft und die durch die Position des Berührungspunkts, an dem der erste Gleitvorgang auf dem Touchscreen und andere Kanten des Touchscreens endet; und
einen zweiten geschlossenen Bereich, der von der zweiten Kante, einer geraden Linie, die parallel zur zweiten Kante verläuft und die durch die Position des Berührungspunkts, an dem der zweite Gleitvorgang auf dem Touchscreen und andere Kanten des Touchscreens endet.

3. Verfahren nach Anspruch 1 und 2, ferner nach der Auswahl, durch das Endgerät, eines zu sperrenden Bereichs auf dem Touchscreen umfassend:
wenn das Endgerät erkennt, dass mindestens einer der Gleitvorgänge, die von einem Berührungsobjekt durchgeführt werden, das zum Berühren des Touchscreens verwendet wird, den Touchscreen nicht verlässt, Durchführen eines dritten Gleitvorgangs von einer dritten Kante des Touchscreens;
Auswählen, durch das Endgerät, eines ersten zusätzlich zu sperrenden Bereichs auf dem Touchscreen, basierend auf der dritten Kante und einer Berührungspunktposition, an der der dritte Gleitvorgang auf dem Touchscreen endet; und
Sperren, durch das Endgerät, des zu sperrenden Bereichs Folgendes umfasst:
Sperren, durch das Endgerät, des zu sperrenden Bereichs und des ersten zusätzlich zu sperrenden Bereichs.

4. Verfahren nach Anspruch 3, wobei der erste zusätzlich zu sperrende Bereich Folgendes umfasst:
einen dritten geschlossenen Bereich, der von der dritten Kante, einer geraden Linie, die parallel zur dritten Kante verläuft und die durch die Position des Berührungspunkts, an dem der dritte Gleitvorgang auf dem Touchscreen und der ersten und zweiten Kanten des Touchscreens endet.

5. Verfahren nach Anspruch 3 oder 4, ferner nach der Auswahl, durch das Endgerät, eines ersten zusätzlich zu sperrenden Bereichs auf dem Touchscreen umfassend:
wenn das Endgerät erkennt, dass einer oder mehrere der ersten Gleitvorgänge, der zweiten Gleitvorgänge und der dritten Gleitvorgänge, die von dem Berührungsobjekt durchgeführt werden, das zum Berühren des Touchscreens verwendet wird, den Touchscreen nicht verlassen, Durchführen eines vierten Gleitvorgangs von einer vierten Kante des Touchscreens;
Auswählen, durch das Endgerät, eines zweiten zusätzlich zu sperrenden Bereichs auf dem Touchscreen, basierend auf der vierten Kante und einer Berührungspunktposition, an der der vierte Gleitvorgang auf dem Touchscreen endet; und
Sperren, durch das Endgerät, des zu sperrenden Bereichs Folgendes umfasst:
Sperren, durch das Endgerät, des zu sperrenden Bereichs, des ersten zusätzlich zu sperrenden Bereichs und des zweiten zusätzlich zu sperrenden Bereichs.

6. Verfahren nach Anspruch 5, wobei der zweite zusätzlich zu sperrende Bereich Folgendes umfasst:
einen vierten geschlossenen Bereich, der von der vierten Kante, einer geraden Linie, die parallel zur vierten Kante verläuft und die durch die Position des Berührungspunkts, an dem der vierte Gleitvorgang auf dem Touchscreen und der ersten und zweiten Kanten des Touchscreens endet.

7. Endgerät (100), wobei das Endgerät einen Touchscreen (140), einen Speicher (120) und einen Prozessor (180) umfasst, der Prozessor mit dem Touchscreen gekoppelt ist, der Touchscreen so konfiguriert ist, dass er einen Bildschirmstatus des Endgeräts anzeigt, bevor ein Bildschirm gesperrt wird oder in einem Bildschirmsperrvorgang oder nachdem ein Bildschirm gesperrt wurde, und so konfiguriert ist, dass er einen auf dem Touchscreen ausgeführten Vorgang erfasst, der Speicher mit dem Prozessor gekoppelt ist, der Speicher so konfiguriert ist, dass er einen computerausführbaren Programmcode speichert, der Programmcode einen Befehl umfasst und, wenn der Prozessor den Befehl ausführt, der Befehl das Endgerät in die Lage versetzt, das Bildschirmsperrverfahren nach einem der Ansprüche 1 bis 6 durchzuführen.

## Revendications

1. Procédé de verrouillage d'écran, appliqué à un terminal avec un écran tactile, le procédé comprenant :
la détection (201), par le terminal, d'une première opération de glissement mise en oeuvre par un premier objet tactile à partir d'un premier bord de l'écran tactile ; la détection, par le terminal, d'une deuxième opération de glissement mise en oeuvre par un second objet tactile à partir d'un deuxième bord de l'écran tactile avant que la première opération de glissement ne soit libérée, dans lequel le premier bord est différent du deuxième bord ; et en réponse à la détection de la première opération de glissement et à la détection de la deuxième opération de glissement avant que la première opération de glissement ne soit libérée, le déclenchement, par le terminal, d'une procédure de sélection et verrouillage, la procédure de sélection et verrouillage comprenant :
la sélection (202), par le terminal, d'une zone à verrouiller sur l'écran tactile en fonction du premier bord et du deuxième bord de l'écran tactile et de positions respectives de point tactile au niveau desquelles la première opération de glissement et la deuxième opération de glissement s'arrêtent sur l'écran tactile ; et
le verrouillage (203), par le terminal, de la zone à verrouiller pour générer une zone verrouillée correspondante ;
dans lequel chacune parmi la première opération de glissement et la deuxième opération de glissement est définie comme s'étant arrêtée lorsque le terminal ne détecte plus de mouvement de l'objet tactile correspondant ;
après la sélection, par le terminal, d'une zone à verrouiller sur l'écran tactile, le procédé comprenant en outre :
le réglage et l'affichage, par le terminal, d'une couche de couverture couvrant la zone à verrouiller ; dans lequel
la couche de couverture est l'une quelconque parmi les suivantes :
une couche translucide, une couche translucide dans un effet d'animation, une couche translucide avec un message de guidage de verrouillage tactile, ou une couche translucide avec des informations visuelles ; et
après le verrouillage, par le terminal, de la zone à verrouiller, le procédé comprenant en outre :
la suppression, par le terminal, de la couche de couverture qui couvre la zone verrouillée et la restauration d'un affichage dans la zone verrouillée ;
dans lequel lorsqu'une opération tactile qui n'est pas une opération de déverrouillage préréglée et qui est sur la zone verrouillée sur l'écran tactile est détectée, l'écran tactile ne répond pas à l'opération tactile et la couche de couverture couvrant la zone à verrouiller est affichée pour indiquer la zone verrouillée.

2. Procédé selon la revendication 1, dans lequel la zone à verrouiller comprend :
une première zone fermée formée par le premier bord, une ligne droite qui est parallèle au premier bord et qui passe à travers la position de point tactile au niveau de laquelle la première opération de glissement s'arrête sur l'écran tactile, et d'autres bords de l'écran tactile ; et
une deuxième zone fermée formée par le deuxième bord, une ligne droite qui est parallèle au deuxième bord et qui passe à travers la position de point tactile au niveau de laquelle la deuxième opération de glissement s'arrête sur l'écran tactile, et d'autres bords de l'écran tactile.

3. Procédé selon la revendication 1 ou 2, après la sélection, par le terminal, d'une zone à verrouiller sur l'écran tactile, comprenant en outre :
lorsque le terminal détecte qu'au moins l'une parmi la première opération de glissement et la deuxième opération de glissement mise en oeuvre par un objet tactile utilisé pour toucher l'écran tactile ne quitte pas l'écran tactile, la mise en oeuvre d'une troisième opération de glissement à partir d'un troisième bord de l'écran tactile ;
la sélection, par le terminal, d'une première zone à verrouiller supplémentaire sur l'écran tactile en fonction du troisième bord et d'une position de point tactile au niveau de laquelle la troisième opération de glissement s'arrête sur l'écran tactile ; et
le verrouillage, par le terminal, de la zone à verrouiller comprend :
le verrouillage, par le terminal, de la zone à verrouiller et de la première zone à verrouiller supplémentaire.

4. Procédé selon la revendication 3, dans lequel la première zone à verrouiller supplémentaire comprend :
une troisième zone fermée formée par le troisième bord, une ligne droite qui est parallèle au troisième bord et qui passe à travers la position de point tactile au niveau de laquelle la troisième opération de glissement s'arrête sur l'écran tactile, et les premier et deuxième bords de l'écran tactile.

5. Procédé selon la revendication 3 ou 4, après la sélection, par le terminal, d'une première zone à verrouiller supplémentaire sur l'écran tactile, comprenant en outre :
lorsque le terminal détecte que l'une quelconque ou plusieurs quelconques parmi la première opération de glissement, la deuxième opération de glissement et la troisième opération de glissement mises en oeuvre par l'objet tactile utilisé pour toucher l'écran tactile ne quittent pas l'écran tactile, la mise en oeuvre d'une quatrième opération de glissement à partir d'un quatrième bord de l'écran tactile ;
la sélection, par le terminal, d'une seconde zone à verrouiller supplémentaire sur l'écran tactile en fonction du quatrième bord et d'une position de point tactile au niveau de laquelle la quatrième opération de glissement s'arrête sur l'écran tactile ; et
le verrouillage, par le terminal, de la zone à verrouiller comprend :
le verrouillage, par le terminal, de la zone à verrouiller, de la première zone à verrouiller supplémentaire, et de la seconde zone à verrouiller supplémentaire.

6. Procédé selon la revendication 5, dans lequel la seconde zone à verrouiller supplémentaire comprend :
une quatrième zone fermée formée par le quatrième bord, une ligne droite qui est parallèle au quatrième bord et qui passe à travers la position de point tactile au niveau de laquelle la quatrième opération de glissement s'arrête sur l'écran tactile, et les premier et deuxième bords de l'écran tactile.

7. Terminal (100), le terminal comprenant un écran tactile (140), une mémoire (120) et un processeur (180), le processeur étant couplé à l'écran tactile, l'écran tactile étant configuré pour afficher un état d'écran du terminal avant qu'un écran soit verrouillé, ou dans un processus de verrouillage à l'écran, ou après qu'un écran est verrouillé, et étant configuré pour détecter une opération mise en oeuvre sur l'écran tactile, la mémoire étant couplée au processeur, la mémoire étant configurée pour stocker un code de programme exécutable par ordinateur, le code de programme comprenant une instruction, et lorsque le processeur exécute l'instruction, l'instruction permettant au terminal de mettre en oeuvre le procédé de verrouillage d'écran selon l'une quelconque des revendications 1 à 6.
